# EUROPEAN PATENT APPLICATION

(11) **EP 1 045 568 A2**
(43) Date of publication of application: **18.10.2000**
(21) Application number: 00302852.9
(22) Date of filing: 04.04.2000
(51) Int. Cl.: H04M 17/00

(54) **Prepaid billing method for communication systems**

(30) Priority: 15.04.1999 US 292210
(71) Applicant: LUCENT TECHNOLOGIES INC., Murray Hill, New Jersey 07974-0636 (US)
(72) Inventor: Fang, I-Ning Hsu, Singapore 437920 (SG); Ku, Pen-Sheng, Naperville, Illinois 60565 (US); Ting, Jason Cheng, Taipei 105 (TW); Yu, Bee Yun, Morristown, New Jersey 07960 (US)
(74) Representative: Buckley, Christopher Simon Thirsk

(57) **Abstract**

In a method of providing prepaid service to subscribers of a communication system where the subscribers need not enter any code prior to using the system, the subscribers can use the services provided by the system once registered into the system and as long as they have prepaid the system provider.

## Description

### Field of the Invention

This application is generally related to methods of billing subscribers of a communication system and in particular to a method of providing prepaid service billing to subscribers of a communication system.

### Background of the Invention

In existing communication systems, including traditional telephony systems and wireless communication systems, different methods for billing users of such systems have been developed. Traditionally, subscribers of a communication system are billed on a monthly basis and the amount of the bill is calculated from the length of each of the calls made by a subscriber during the monthly period and on any features used by the subscriber. Some of the well known features provided by a communication system provider are "call waiting" and "three way conference call." In addition to the traditional billing methods in which users are billed monthly based on their time usage and features provided by the communication system provider, many communication systems have given customers an opportunity to buy communication services (e.g., wireline telephone service, wireless telephone service) on a prepaid basis. In such prepaid billing arrangements, customers are provided with a "telephone card" having a magnetic strip at the rear of the card onto which a secret code is recorded. In many cases, the code that is magnetically recorded at the rear of the card is also displayed (using alphanumeric characters) at the front of the card along with the name of the customer. The customer prepays the communication service provider a certain amount which payment corresponds to the customer total call time. The customer total call time is the aggregate length of time elapsed during each of the calls made by the subscriber within that monthly billing period. The features (e.g., call forwarding, three-way conferencing) provided by the communication system provider are also prepaid for by the customer. When using such a prepaid service, a subscriber typically dials an access code (provided by the service provider) followed by the secret code before dialing the calling number. Thus, the subscriber either has to be in possession of the card to ascertain the code or have committed the code to memory to use the prepaid service. Also, many public phones now have a device which can read the magnetically recorded code from the "telephone card" when the subscriber slides the magnetic strip portion of the "telephone card" through such a device. Repeated use of the card in this manner would tend to render the card physically worn and inoperable requiring that the subscriber obtain a new card or memorize the secret code. Also, a subscriber who decides not to memorize the code runs the risk of not being able to use the prepaid service at any particular moment if the card is lost. Such a subscriber would have to contact the service provider to obtain the code or buy a new card. Cards which have the code displayed at the front, if stolen or lost, can be used by the possessor of such a card at the expense of the subscriber who prepaid for the service. Even subscribers who have memorized the secret code risk their code being compromised when making a phone call in a public place where unscrupulous individuals can observe the sequence of keys being pushed by the subscriber and thus decipher the subscribers secret code unbeknownst to the subscriber. What is therefore needed is a method of providing prepaid service to subscribers of a communication system where all of the risks mentioned above are eliminated and the subscriber need not dial any secret code prior to using (e.g., make a telephone call).

### Summary of the Invention

The present invention is a method for providing prepaid service to subscribers of a communication system where the subscribers need not memorize any secret codes and need not use a card or any other similar device to activate prepaid service. The system provider provides a database which contains information that identify distinct prepaid service billing accounts. The information comprises a secret code and other information for each prepaid service billing account. Subscribers who desire prepaid service prepay the service provider for a certain amount of service time and in return the subscriber is given a unique secret code and an identifier which identifies the subscriber as a prepaid service subscriber. The communication system is designed such that whenever any subscriber requests service, the identifier associated with the subscriber's equipment is transmitted from the subscriber equipment to the service provider equipment. The first time the subscriber desires to use the communication system, service provider equipment registers the subscriber equipment and activates the prepaid service account for that subscriber by associating that subscriber's equipment with the identifier. Subsequently, the subscriber is able to use the system as long there is service time left in the subscriber's billing account. The system is able to recognize the subscriber as a prepaid subscriber from the identifier and thus the subscriber does not have to communicate the secret code to the service provider each time the subscriber uses the system. When the subscriber wishes to purchase additional service time, the subscriber again prepays the service provider and the service provider adds the appropriate amount of service time to the subscriber's prepaid service billing account.

In particular, the method of the present invention comprises the following steps: the service provider creates a database comprising identifiers and associated secret codes and other information. When the service provider receives a service request from a subscriber, the service provider equipment determines, from information stored in the database, whether the subscriber making the request is a prepaid service subscriber. If so, the service provider equipment provides service to the subscriber as long as the subscriber's billing account has service time remaining. If the service provider determines that the service request is not from a prepaid subscriber, the service provider then determines whether the service request is from a first time subscriber requesting prepaid service. If so, the service provider registers the subscriber equipment by collecting information from the subscriber, which information includes the secret code, the identifier and other data personal to the subscriber, and activates the subscriber's account. If the service request is not from a first time subscriber, the service provider terminates the request after confirming that the request is indeed not from a first time subscriber requesting prepaid service.

### Brief Description of the Drawings

FIG. 1 is a flow chart of the method of the present invention;
FIG. 2 is a block diagram of an IS-95 compliant CDMA communication system showing service provider equipment and subscriber equipment.

### Detailed Description

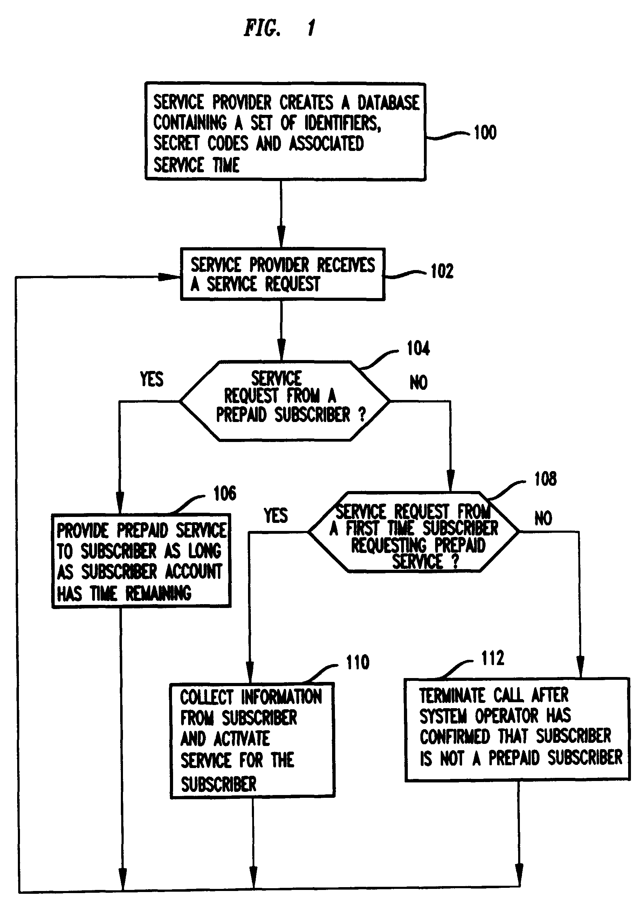

Referring to FIG. 1, there is shown a flow chart of the method of the present invention. The method of the present invention allows subscribers to use a prepaid billing service where the subscribers do not have to enter any code before or while requesting service. The communication system registers the subscriber into the system the first time the subscriber attempts to use the system. In subsequent service requests made by the subscriber equipment, the communication system is able to recognize a subscriber as a prepaid service subscriber from information the identifier generated during registration of the subscriber equipment.

In step 100, the service provider creates a database containing distinct prepaid service billing accounts. Each prepaid service billing account comprises at least a secret code, an identifier and service time. The prepaid service billing account contains other information such as passwords, optional service features and default service features. The identifier is a code (typically a numeric code) which is associated with a particular subscriber equipment (e.g., cellular phones, modems, facsimile machines). In wireless and wireline communication systems, the identifier is known as a Directory Number (DN) or a Mobile Directory Number (MDN) or simply a telephone number. The secret code is a unique code generated by the service provider equipment for each prepaid service account. The service time is an amount of time (usually measured in terms of minutes or dollar amount) corresponding to the prepaid amount and is allocated to a prepaid service subscriber. The subscriber can use the services of the communication system as long as there is service time left in the subscriber prepaid service account. The services provided by the communication system are communication services such as the transmission and reception of communication signals (e.g., voice, data, video signals) between subscribers.

In step 102, the service provider equipment receives a service request from a subscriber. The service provider equipment are various communication equipment owned and operated by the service provider that process, control and route communication signals between users. The communications signals are routed, controlled with the use of signaling information which are communication signals generated by the service provider equipment and subscriber equipment to achieve communications between users in accordance with certain communication protocols and standards. The communication protocol and standards define how communication between users of the same or different communication systems is initiated, maintained and terminated. For example, the service provider equipment that receives a service request can be a database center with well known equipment such as a Private Branch Exchange (PBX) and a Computer Telephony Interface (CTI).

The service request may, for example, be the result of the subscriber desiring to initiate voice communications with another user of the system or other system. The service request can also be from a subscriber receiving a call from another user of the system or other system. As is discussed below, the service provider equipment is able to receive the identifier (e.g., telephone number) from the requesting subscriber's equipment. In accordance with the method of the present invention and as discussed below, the method of the present invention moves to step 104 where the service provider equipment determines the status of the requesting subscriber's prepaid service billing account. The status of a prepaid service billing account provides whether a subscriber has been registered (as discussed below) as a prepaid subscriber and whether there is any service time remaining on the account. A prepaid service subscriber is a subscriber whose identifier matches one of the identifiers stored in the database created in step 100 of the method of the present invention. Each subscriber including the requesting subscriber is associated with a prepaid service billing account.

In step 106, the service equipment has determined that the requesting subscriber is a prepaid service subscriber and thus service is provided to such a subscriber as long as that subscriber's prepaid service account has service time remaining. When a subscriber first prepays for service, a certain block of time (usually measured in terms of minutes) is attributed to that subscriber's account. As the subscriber uses the communication system's services, the service time decreases accordingly and will lapse to zero minutes unless the subscriber buys additional time from the service provider.

In step 108, the service provider equipment has determined that the request made in step 102 is not from a prepaid service subscriber. The service equipment then determines whether the request is from a first time subscriber. The service equipment determines whether the requesting subscriber is a first time user by checking the identifier being transmitted by the subscriber equipment. The communication equipment of a first time subscriber is usually given a general identifier that allows the subscriber to register into the communication system.

In step 110, registration involves the service provider equipment (or operator) collecting data from the requesting subscriber including the subscriber's personal information (e.g., name, address), the secret code and any other features (e.g., call waiting, three way conferencing) for which the subscriber has paid. The service equipment then associates the identifier-- corresponding to the secret code obtained from the subscriber-- to the subscriber equipment. The service provider equipment then activates the account associated with the secret code obtained from the subscriber. Activation of an account means that the subscriber will be provided services upon request (no more collection of data by the service provider equipment) as long as there is service time remaining in the subscriber's prepaid service billing account. Thus, any subsequent service request by that subscriber's equipment will be immediately identified as a prepaid service request based on the identifier received by the service provider equipment. When the subscriber's service time is nearly zero, the service provider can, for example, send a message advising the subscriber about the amount of service time left in the subscriber account. The subscriber can then contact the service provider, or a distributor of the prepaid service provided by the service provider, to replenish the subscriber's service time. The subscriber can obtain another secret code or use the same secret code.

In step 112, the service provider equipment has determined that the request made is not from a prepaid service provider and is not from a first time subscriber requesting prepaid service. The service request is terminated after the service provider equipment (or operator) has confirmed that the request made should not be provided. One way of confirming that the request should be denied is to query the requesting user several times to ensure that the information provided by such subscriber was not erroneously entered.

After either steps 106, 110 or 112 the method of the present invention returns to step 102 where the service provider equipment waits for the next service request. It should be noted that in step 110, the method of the present invention can also update the database created in step 100 by adding and/or deleting prepaid service accounts.

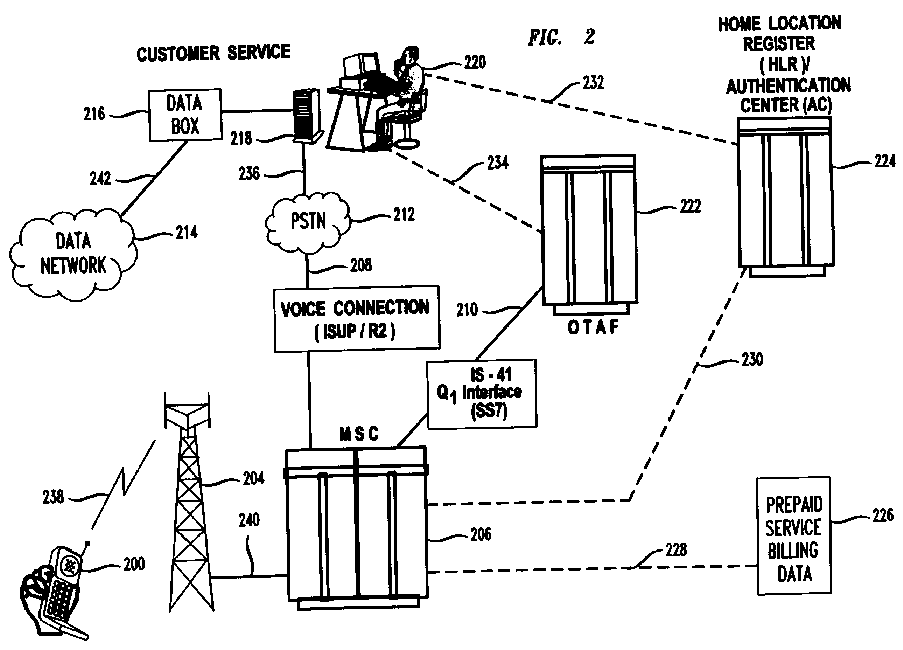

Referring now to FIG. 2 in which a Code Division Multiple Access (CDMA) communication system that complies with the well known IS-95 standard is shown. The user equipment 200 is a wireless telephone handset. The service provider equipment comprises Mobile Switching Center (MSC) 206 coupled to Prepaid Service Billing Data database 226 via communication link 228. MSC is also coupled to Home Location Register/Authentication Center (HLR/AC) 224 via communication link 230. Further, MSC 206 is coupled to the Public Switched Telephone Network (PSTN) 212 via a voice connection interface represented by communication link 208. Still further, MSC 206 is coupled to Over The Air Function (OTAF) equipment 222 via a well known interface known as an IS-41 interface which is represented by communication link 210. Customer Service Center (CSC) 220 is coupled to OTAF 222 and HLR/AC 224 via communication links 234 and 232 respectively. Switching equipment 218 located at CSC 220 routes data information to a Data Network 214 (e.g., the Internet) via Data Box 216 (e.g., bank of modems) and communication link 242 and routes voice signals to PSTN 212 via communication link 236. Subscriber equipment 200 communicates with service provider equipment via wireless communication link 238. Communication signals to and from subscriber equipment 200 are conveyed to MSC 206 via base station 204 and communication link 240. The subscriber information can also be stored in an audio or data storage device such as a Stand alone HLR (SHLR), a short message service center (SMSC) or a Voice Mail System (VMS).

In applying the method of the present invention to the CDMA system depicted by FIG. 2, it should be noted that the invention can be used in other architecture of CDMA systems or in other communication systems including but not limited to Time Division Multiple Access (TDMA) wireless communication systems and Frequency Division Multiple Access (FDMA) wireless communication systems. User equipment 200, for the discussion pertaining to FIG. 2, is assumed to be a wireless handset that operates in an IS-95 compliant CDMA wireless communication system. It should be readily obvious that user equipment 200 can be other well known equipment such as a modem or a facsimile machine. The communication system creates a database located at HLR/AC 224 which contains billing account information for the subscribers of the communication system including prepaid service subscribers. Prepaid billing service data equipment 226 contains the service time associated with each prepaid service account stored in HLR/AC 224. Equipment 226 can be readily subsumed or be made part of HLR/AC 224; this depends on the system architecture design. Handset 200 is bought by a subscriber who wishes to have prepaid service. The service provider or its agent who sold the phone to the subscriber also provided the subscriber with a Mobile Directory Number (MDN), a secret code, and a certain amount of service time corresponding to the amount paid by the subscriber. The subscriber dials a special number or an access code (in most cases, "888") to contact CSC 220 so as to resister handset 200. The special number is also provided by the service provider. In dialing the special number, handset 200 is caused to transmit a "dummy" International Mobile Subscriber Identification (IMSI) number to CSC 220. The IMSI number is a number generated by CSC 220 that allows handset 200 to communicate with the service provider equipment. CSC 220 collects the information from the subscriber via MSC 206, communication link 210, OTAF 222 and communication link 234. CSC 220 can collect the subscriber information in several well known manners. For example, CSC 220 can use a Voice Interactive System (VIS) (not shown) that obtains the information from the subscriber by verbally prompting the subscriber. CSC 220 uses a Computer Telephony Interface (CTI) (also not shown) to interface between the VIS and a database such as HLR/AC 224. Voice interaction between the subscriber and CSC 220 occur via link communication link 236, PSTN 212, communication link 208, MSC 206, communication link 240, base station 204 and wireless link 238. CSC then generates an IMSI and MDN which it downloads onto handset 200 thus configuring handset 200 for prepaid service operation. CSC 220 also downloads the generated MDN and IMSI onto HLR/AC 224 via communication link 232. CSC 220 informs the subscriber that handset 200 has been properly configured and then terminates the call. The subscriber can now use handset 200 to call other users or to receive calls from other users. Whenever handset 200 is used to either start a call or receive a call, MSC 206 obtains the IMSI number and the MDN from handset 200 to check that handset 200 has been registered and to check HLR/AC 224 and Billing Data database 226 to confirm that handset 200 does indeed have prepaid service and that the account has service time left. Thus, the subscriber need not provide or enter any secret code to use handset 200 once the handset has been registered.

The subscriber can dial another special number (typically "999") to find out how much time is left (i.e., the service time) in the prepaid service account. CSC 220 prompts the subscriber for the secret code. After the secret code has been entered by the subscriber, CSC 220 gets the balance from Billing Data database 226 and provides the balance to the subscriber. It should be noted that when the subscriber uses handset 200 (which has already been registered) to query about the balance of the prepaid account, the system already knows the secret code from the MDN and IMSI received by MSC 206. However, CSC 220 may still prompt the subscriber for the secret code as a validity check to ensure that information is being provided to a subscriber that knows the secret code. The subscriber can use any other phone to obtain the service time, however CSC 220 will ask the user to provide the MDN associated with handset 200 in addition to the secret code.

Handset 200, which was programmed as a prepaid service handset, can be convened to a handset that is provided with regular service. That is, any subscriber equipment which has been registered for one type of billing service can be convened to another type of billing service. Thus, for the example discussed above, handset 200 can be convened to non-prepaid service by the subscriber dialing a service activation number. In such a case, CSC 220 asks the user for the billing service type desired by the subscriber. CSC 220 also asks the subscriber to enter the handset's MDN and Personal Identification Number (PIN) to verify that handset 200 has already been registered in the system. CSC 220 uses the MDN to retrieve personal information and other information associated with the subscriber and use the IMSI to retrieve the information associated with prepaid service. CSC 220 then reconfigures the handset (by downloading new IMSI and MDN onto handset 200) and also store the newly generated information in HLR/AC 224. It should readily obvious that handset 200 can be convened in similar fashion from regular service (or non-prepaid service) to prepaid service.

## Claims

1. A method of providing prepaid service to subscribers of a communication system, the method CHARACTERIZED BY THE STEPS OF:
creating a database containing distinct prepaid service billing accounts;
receiving a service request from a subscriber;
allowing the requesting subscriber to use the communication system based on a status of a prepaid service billing account associated with the requesting subscriber.
